# EUROPEAN PATENT APPLICATION

(11) **EP 1 184 624 A1**
(43) Date of publication of application: **06.03.2002**
(21) Application number: 01203278.5
(22) Date of filing: 30.08.2001
(51) Int. Cl.: F23L 11/02, F23J 11/02

(54) **Device for merging exhaust gasses of a gas heater and a ventilation system with or without connection to a heat recovery unit**

(30) Priority: 30.08.2000 NL 1016049
(71) Applicant: GASTEC N.V., NL-7327 AC Apeldoorn (NL)
(72) Inventor: Dijkhof, Willem, 7323 KA Apeldoorn (NL)
(74) Representative: Prins, Adrianus Willem

(57) **Abstract**

Device for merging exhaust gasses of a gas consuming appliance and a ventilation system, the device comprising a first and a second inlet, wherein, in use, flue gas flows through a first inlet opening into the first inlet and contaminated ventilating air flows through the second inlet opening into the second inlet, the device being further provided with an outlet, the outlet being connected to the first and the second outlet, wherein, in use, the flue gas and the contaminated ventilating air flow out of the outlet, the first inlet, at an inner side, being provided with a flow resistance element. Optionally, for protection sake, in the second inlet a flow or gas composition sensor can be included and in the first inlet or outlet, a temperature sensor.

## Description

The invention relates to a device for merging exhaust gasses of a gas consuming appliance and a ventilation system for recovering heat from the merged exhaust gasses.

With a known device, exhaust gasses of a ventilation system are exhausted to the outside air or fed to a Heat Recovery Unit.

Also from a gas consuming appliance, hot exhaust gas is exhausted. Most often, this exhaust gas is fed, unused, to the outside air. There is a need to also use the exhaust gas of a gas consuming appliance for heating another gas. The exhaust gas of a gas consuming appliance could be mixed with the exhaust gas of a ventilation system. A problem with exhausting exhaust gas from a gas consuming appliance is that a situation can arise in which too high a reduced pressure is present in the exhaust pipe of the gas consuming appliance. In that case, the excess air in the gas consuming appliance increases, so that the flames in the gas consuming appliance may extinguish.

The object of the invention is to provide a device with which the exhaust gas of a gas consuming appliance and the exhaust gas of a ventilation system can be merged, while the merged exhaust gasses can be supplied to the Heat Recovery Unit without obtaining too high a reduced pressure in the exhaust pipe of the gas consuming appliance.

The object mentioned is achieved with the device for merging exhaust gasses of a gas consuming appliance and a ventilation system, the device comprising a first and a second inlet, while, in use, flue gas flows into the first inlet through a first inlet opening and contaminated ventilating air flows into the second inlet through a second inlet opening, the device being further provided with an outlet, the outlet being connected to the first and the second inlet, the flue gas and the contaminated ventilating air flowing, in use, out of the outlet, the first inlet being provided, at an inner side, with a flow resistance element and the device further comprising a Heat Recovery Unit, the Heat Recovery Unit being provided with a heat source inlet, the outlet being connected to the heat source inlet for recovering heat from the merged exhaust gasses.

An advantage of the device according to the invention is that the flow in the discharge pipe of the gas consuming appliance is impeded by the flow resistance element in the inlet, so that reduced pressure prevailing in the ventilation system is at least partly nullified in the first inlet. As a consequence, the gas consuming appliance continues to function, the excess air does not increase, and the flames will not extinguish.

A safe embodiment of the device according to the invention is characterized in that the second inlet is provided, at the inner side, with a flow sensor, arranged to deliver a signal upon a measurement less than or equal to a predetermined flow velocity, whereupon the gas supply to the gas consuming appliance is shut off. This offers the advantage that, for instance at a failure of the fan of the ventilation system, the gas supply to the gas consuming appliance can be shut off so that no flue gasses can flow into the ventilation system. In a known device for supplying relatively hot gas to a Heat Recovery Unit, pressure switches are used for protection against an undesired flow direction. Research has shown that the substantial differences in pressure occurring when a connected Heat Recovery Unit functions alternately in a high and a low mode, cannot be processed. In the safe embodiment of the device according to the invention, the pressure switches are superfluous through the presence of the flow sensor. Also another reflux protection, based on registration of the temperature of the gas has, in this respect, proven impractical since very small differences between the ambient temperature and flue gas temperature can very easily lead to a malfunction. In the safe embodiment of the device according to the invention, this reflux protection has also been replaced by the flow sensor.

In a further elaboration of the invention, in addition to or instead of the flow sensor, the device can also be characterized in that the second inlet, at an inner side, is provided with a sensor for measuring the gas composition, the sensor being arranged for delivering a signal whereupon the gas supply to the gas consuming appliance is shut off if the gas in the second outlet contains flue gas. Such a sensor can, for instance, be a O₂ or CO₂ sensor. Also with gas composition sensors, for instance upon failure of the fan of the ventilation system, the gas supply to the gas consuming appliance can be shut off so that it is prevented that, in these circumstances, flue gasses flow into the ventilation system.

Another embodiment of the device according to the invention is characterized in that the first inlet and/or the outlet is provided at an inner side with a temperature sensor, arranged to deliver a signal upon a measurement larger than or equal to a pre-set temperature, whereupon the gas supply to the gas consuming appliance is shut off. This offers the advantage that, as soon as too high a temperature of the flue gas occurs, the gas consuming appliance extinguishes, so that the parts of the device along which the flue gas normally flows, will not melt, soften, degenerate or be otherwise affected.

Preferably, the device is arranged to supply, in use, outside air to the Heat Recovery Unit for heating the outside air with heat extracted from the merged exhaust gasses.

Here, in particular, it holds that the device is arranged to supply, in use, outside air, heated with the aid of the Heat Recovery Unit, to the ventilation system. The output of such a device is relatively large in that the heated outside air can be used for ventilation *and* heating of rooms in buildings.

The invention will presently be elucidated on the basis of a drawing.

In the drawing:

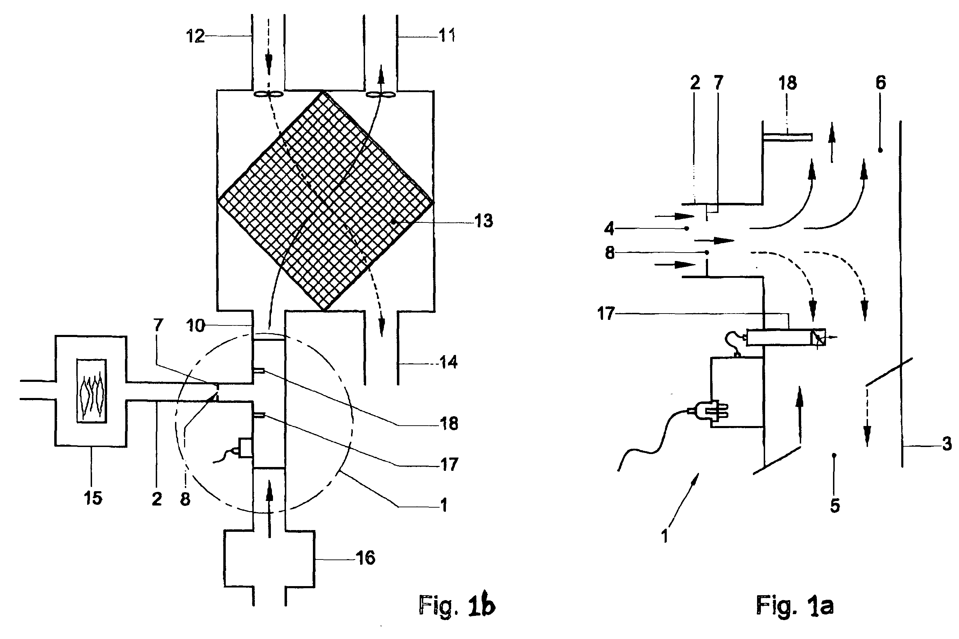

Fig. 1a shows a special embodiment of a device according to the invention; and
Fig. 1b shows a device according to Fig. 1a, the device further being provided with a Heat Recovery Unit.

In Fig. 1a, a device according to the invention is shown for merging exhaust gasses from a gas consuming appliance and a ventilation system and for recovering heat from the merged exhaust gasses. The device 1 comprises a first inlet 2 and a second inlet 3. Through a first inlet opening 4, flue gas flows into the first inlet 2. Through a second inlet opening 5, contaminated ventilation air flows into the second inlet 3. The device is further provided with an outlet 6, the outlet 6 being connected to the first inlet 2 and the second inlet 3. In use, the flue gas and the contaminated ventilation air flow out of the outlet 6. At an inner side, the first inlet 2 is provided with a flow resistance element, which is shown in Fig. 1a as a constriction 7. The resistance element can also comprise a curve or bend of the first inlet 2. The flow resistance element, which, in Fig. 1a, is drawn as a constriction 7, comprises at least one passage opening 8 for allowing the passage of the flue gas. The at least one passage opening 8 is smaller than the first inlet opening 4.

In Fig. 1b, a device according to Fig. 1 is shown, in which the device is provided with a Heat Recovery Unit 9, known per se. Here, the outlet 6 is connected to the heat source inlet 10. The exhaust gasses from a gas consuming appliance 15 and a ventilation system 16 are guided through the Heat Recovery Unit to the Heat Recovery Unit outlet 11. Such a Heat Recovery Unit 9 comprises, for instance, a cross or counter current heat exchanger built up from parallel plates. Via the outside air inlet 12, outside air is led into the Heat Recovery Unit 9. This outside air is heated by the high efficiency exchanger 13 and proceeds to flow, via the heated air outlet 14, out of the Heat Recovery Unit. Preferably, this air outlet 14 is connected to the air inlet of the ventilation system. To the first inlet 2 of the device 1, a gas consuming appliance 15 is connected. To the second inlet 3 of the device, a ventilation system 16 is connected. The inside of the second inlet 3 is provided with a flow sensor 17. The flow sensor 17 is arranged, upon a measurement less than or equal to a pre-set flow velocity, to deliver a signal, whereupon the gas supply (not shown) to the gas consuming appliance 15 is shut off. Optionally, in addition to or instead of the flow sensor 17, a gas composition sensor can be arranged in the second inlet 3. Such a gas composition sensor can, for instance, be an O₂ or CO₂ sensor. When the gas composition sensor detects flue gas, the gas supply to the gas consuming appliance 15 can be shut off. An inner side of the first inlet 2 and/or the outlet 6 is provided with a temperature sensor 18. The temperature sensor 18 is arranged, upon a measurement larger than or equal to a pre-set temperature, to deliver a signal whereupon the gas supply (not shown) to the gas consuming appliance 15 is shut off.

The flow resistance offered by the flow resistance element can be tuned to the heat input of the gas consuming appliance 15. The passage opening 18 is adapted to the heat input of the gas consuming appliance to which the first inlet 2 is connected. The exemplary embodiment shown in the Figure has a T-shaped configuration, the first inlet 2 having a diameter of 80 mm and the second inlet 3 and the outlet 6 having a diameter of 150 mm. The constriction 7 has a passage opening 8 of a diameter which is between 20 and 50 mm, and is preferably 35 mm. This special device has a universal character as it is suitable for all central heating boilers with or without hot water equipment, with a fan and a heat input up to 30 kW. It will be clear that the device 1 can be used with or without a Heat Recovery Unit being connected thereto. The gas consuming appliances can comprise water heaters, heat pumps, gas engines and central heating boilers.

Such variants are each considered to fall within the scope of the invention.

## Claims

1. A device for merging exhaust gasses of a gas consuming appliance and a ventilation system, the device comprising a first and a second inlet, wherein, in use, flue gas flows into the first inlet through a first inlet opening and contaminated ventilation air flows into the second inlet through a second inlet opening, the device being further provided with an outlet, the outlet being connected to the first and the second inlet, wherein, in use, the flue gas and the contaminated ventilating air flow out of the outlet, the first inlet being provided at an inner side with a flow resistance element, the device further comprising a Heat Recovery Unit, the Heat Recovery Unit being provided with a heat source inlet, the outlet being connected to the heat source inlet for recovering heat from the merged exhaust gasses.

2. A device according to claim 1, **characterized in that** the flow resistance element comprises at least one curve of the first inlet.

3. A device according to claim 1 or 2, **characterized in that** the flow resistance element comprises at least one passage opening for allowing the passage of a flue gas which is smaller than the first inlet opening.

4. A device according to any one of the preceding claims, **characterized in that** the flow resistance element comprises a constriction.

5. A device according to any one of the preceding claims, **characterized in that** the device further comprises a gas consuming appliance, the gas consuming appliance being provided with a flue gas outlet, the flue gas outlet being connected to the first inlet.

6. A device according to any one of the preceding claims, **characterized in that** the second inlet is provided, at an inner side, with a flow sensor, which is arranged to deliver a signal upon a measurement less than or equal to the pre-set flow velocity, whereupon the gas supply to the gas consuming appliance is shut off.

7. A device according to any one of the preceding claims, **characterized in that** the second inlet is provided, at an inner side, with a sensor for measuring the gas composition, the sensor being arranged for delivering a signal whereupon the gas supply to the gas consuming appliance is shut off if the gas in the second outlet contains flue gas.

8. A device according to claim 7, **characterized in that** the sensor is an O₂ or CO₂ sensor.

9. A device according to any one of the preceding claims, **characterized in that** the first inlet and/or the outlet is provided, at an inner side, with a temperature sensor.

10. A device according to claim 9, **characterized in that** the temperature sensor is arranged, upon a measurement larger than or equal to a pre-set temperature, to deliver a signal whereupon the gas supply to the gas consuming appliance is shut off.

11. A device according to any one of the preceding claims, **characterized in that** the device further comprises a ventilation system, the ventilation system being provided with a ventilation air outlet, the ventilation air outlet being connected to the second inlet.

12. A device according to any one of the preceding claims, **characterized in that** a flow resistance to be offered by the flow resistance element is tuned to the heat input of the gas consuming appliance.

13. A device according to any one of claims 5 - 12, **characterized in that** the passage opening is tuned to the heat input of the gas consuming appliance.

14. A device according to any one of the preceding claims, **characterized in that** the first and second inlet and the outlet together form a T-piece.

15. A device according to claim 14, **characterized in that** the first inlet has a diameter of 80 mm and the second inlet and the outlet have a diameter of 150 mm.

16. A device according to at least claims 3 and 15, **characterized in that** the passage opening has diameter which lies between 20 and 50 mm.

17. A device according to at least claims 3 and 16, **characterized in that** the passage opening has diameter which lies between 30 and 40 mm.

18. A device according to any one of the preceding claims, **characterized in that** the flow resistance to be offered by the flow resistance element is such that the device is useful for discharge of the flue gas coming from a gas consuming appliance with a heat input less than or equal to 30 kW.

19. A device according to any one of claims 3 - 18, **characterized in that** the passage opening is such that the device is useful for discharge of the flue gas coming from a gas consuming appliance with a heat input less than or equal to 30 kW.

20. A device according to any one of the preceding claims, **characterized in that** the device is arranged to supply, in use, outside air to the Heat Recovery Unit for heating the outside air with heat extracted from the merged exhaust gasses.

21. A device according to claim 20, **characterized in that** the device is arranged to supply, in use, the outside air, heated with the aid of the Heat Recovery Unit to the ventilation system.
